(19) Europäisches Patentamt
European Patent Office
Office européen des brevets

(11) EP 0 610 942 B1

(12) **EUROPEAN PATENT SPECIFICATION**

(45) Date of publication and mention of the grant of the patent:
**10.06.1998 Bulletin 1998/24**

(51) Int Cl.[6]: **C08F 210/16**, C08J 5/18

(21) Application number: **94102136.2**

(22) Date of filing: **11.02.1994**

(54) **Ethylene.alpha-olefin copolymer and film thereof**

Ethylen/Alpha-Olefin Copolymer und Film davon

Copolymère éthylène/alpha-oléfine et film préparé à partir de celui-ci

(84) Designated Contracting States:
**DE FR GB IT**

(30) Priority: **12.02.1993 JP 24508/93**

(43) Date of publication of application:
**17.08.1994 Bulletin 1994/33**

(73) Proprietor: **TOSOH CORPORATION**
**Yamaguchi-ken 746 (JP)**

(72) Inventors:
- **Sone, Makoto**
  **Mie-gun, Mie-ken (JP)**
- **Yano, Akihiro**
  **Yokkaichi-shi, Mie-ken (JP)**
- **Ohhama, Toshio**
  **Yokkaichi-shi, Mie-ken (JP)**
- **Matsuo, Hidehiko**
  **Yokkaichi-shi, Mie-ken (JP)**
- **Mizu, Masumi**
  **Yokkaichi-shi, Mie-ken (JP)**
- **Satoh, Morihiko**
  **Yokkaichi-shi, Mie-ken (JP)**

(74) Representative: **VOSSIUS & PARTNER**
**Siebertstrasse 4**
**81675 München (DE)**

(56) References cited:
**EP-A- 0 164 215**
**EP-A- 0 450 304**
**EP-A- 0 452 920**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a novel ethylene.α-olefin copolymer which is superior to conventional ethylene copolymers in transparency, heat-sealing properties, resistance to environmental stress cracking, and melt tension. The present invention also relates to a film formed from the novel ethylene.α-olefin copolymer.

Linear low density polyethylenes (LLDPE), which have a density of not higher than 0.94 g/cm$^3$, are known to be superior to high density polyethylene in transparency, impact resistance, and environmental stress cracking resistance (ESCR), and to be superior to low density polyethylene in impact resistance and creep resistance. Therefore, LLDPE is widely used in the field of packing materials, especially as films and laminating films.

The LLDPE, however, is inferior to high-pressure low-density polyethylene in transparency and melt elasticity, therefore having disadvantages of less transparency of the film, less bubble stability in inflation molding, and larger neck-in. Moreover, when the ratio of α-olefin comonomer is increased to lower the density of LLDPE, slip properties of the laminated film are impaired, blocking of the film is caused, heat-sealing properties are limited because of broad distribution of comonomer composition. The ESCR of LLDPE needs to be improved further, although LLDPE is better in ESCR than high-pressure low-density polyethylene. Furthermore, throughput of LLDPE is low and energy consumption is high disadvantageously in processing because of its narrower molecular weight distribution than that of high-pressure low-density polyethylene.

On the other hand, high-pressure low-density polyethylene exhibits low ESCR, and has low mechanical strength to cause low tear resistance, and when the film thickness is increased to raise the strength, the film becomes coarse and stiff to the touch and adhesiveness thereof becomes lower.

JP-A-60-88016 (1985) discloses adjustment of composition distribution and other characteristics to improve transparency, low-temperature heat-sealability, and anti-blocking properties. However, it achieves neither uniformity of the composition nor improvement of the melt elasticity.

Thus, it is the object of the present invention to solve the above problems and to provide a novel ethylene.α-olefin copolymer which is excellent in processability, melt elasticity, transparency, heat-sealing properties, and environmental stress cracking resistance.

A further object is to provide a film formed from the above ethylene.α-olefin copolymer.

These objects have been achieved by the surprising finding that the ethylene.α-olefin copolymer is remarkably improved in transparency, heat-sealing properties, melt elasticity, processability, and environmental stress cracking resistance without impairing the properties of conventional LLDPE, when the ratio of the intrinsic viscosity of the high molecular weight fraction to that of the low molecular weight fraction and the difference of the loss elastic moduluses at different frequencies are respectively within specified ranges.

The copolymer of the present invention is an ethylene.a-olefin copolymer formed by copolymerization of ethylene with α-olefin having three or more carbons, satisfying the conditions:

(A) MFR being in the range of from 0.001 to 100 g/l0min,
(B) density (d) being in the range of from 0.86 to 0.94 g/cm$^3$,
(C) ratio of $G_1$ to $G_2$ being in the range

$$0.50 \leqq G_1/G_2 \leqq 0.95 \quad (1)$$

where $G_i$ is the ratio of intrinsic viscosity [η] to the intrinsic viscosity $[\eta]_1$ of a linear polyethylene having the same weight-average molecular-weight, and $G_1$ is that for a high molecular weight fraction and $G_2$ is that for a low molecular weight fraction, and
(D) activation energies Ea(0.1) and Ea(100) (kcal/mol) of loss elastic modulus G" at the standard temperature 190°C frequency $\omega_0$ =0.1 (rad/sec) and $\omega_1$ =100 (rad/sec) respectively are in the relation:

$$\Delta Ea = Ea(0.1) - Ea(100) > 0 \quad (2)$$

The ethylene.α-olefin copolymer of the present invention has an MFR in the range of from 0.001 to 100 g/10min, preferably from 0.01 to 50 g/10min, more preferably from 0.1 to 30 g/10min. The copolymer having an MFR of 0.001 or lower is poor in fluidity, whereas the copolymer having an MFR of 100 or higher is poor in impact resistance.

The ethylene.α-olefin copolymer of the present invention has a density (d) in the range of from 0.86 to 0.94 g/cm$^3$, preferably from 0.87 to 0.93 g/cm$^3$. The copolymer having a density of lower than 0.86 g/cm$^3$ exhibits lower rigidity, whereas the polymer having a density of higher than 0.94 is poorer in impact resistance and tear strength.

The ethylene.α-olefin copolymer of the present invention is prepared by copolymerization of ethylene with an α-olefin having 3 or more carbons. The α-olefin having 3 or more carbons includes propylene, butene-1, pentene-1, hexene-1, 4-methyl-1-pentene, heptene-1, octene-1, nonene-1, decene-1, undecene-1, dodecene-1, tridecene-1, tetradecene-1, pentadecene-1, hexadecene-1, heptadecene-1, octadecene-1, nonadecene-1, and eicosene-1. Among them, preferred are butene-1, pentene-1, hexene-1, 4-methyl-1-pentene, heptene-1, octene-1, nonene-1, decene-1, undecene-1, dodecene-1, tridecene-1, tetradecene-1, pentadecene-1, hexadecene-1, heptadecene-1, octadecene nonadecene-1, and eisocene-1. Two or more α-olefins may be combinedly used. The α-olefin is copolymerized usually in an amount of from 1 to 40 % by weight of the whole polymer.

The ethylene.α-olefin copolymer of the present invention needs to satisfy the relation that the ratio of $G_1$ to $G_2$ is in the range:

$$0.50 \leqq G_1/G_2 \leqq 0.95 \quad (1)$$

preferably,

$$0.60 \leqq G_1/G_2 \leqq 0.85 \quad (1')$$

where $G_i$ is the ratio of intrinsic viscosity $[\eta]$ to the intrinsic viscosity $[\eta]_1$ of a linear polyethylene having the same weight-average molecular-weight, and $G_1$ is that for a high molecular weight fraction and $G_2$ is that for a low molecular weight fraction. In the present invention, the term "high molecular weight fraction" means a forerunning eluate of 30% of the entire eluate in GPC of the copolymer, the term "intermediate fraction" means the following 40% eluate, and the term "low molecular weight fraction" means the last 30% eluate. When the value of $G_1/G_2$ of the ethylene.α-olefin copolymer is in the aforementioned range, the copolymer has high impact resistance, high melt tension, and improved processability in comparison with conventional LLDPE having the same MFR as the copolymer of the present invention.

Further, the ethylene.α-olefin copolymer of the present invention needs to satisfy the relation

$$\Delta Ea = Ea(0.1) - Ea(100) > 0 \quad (2)$$

preferably

$$\Delta Ea = Ea(0.1) - Ea(100) > 0.3 \quad (2')$$

where Ea(0.1) and Ea(100) are activation energies (kcal/mol) of loss elastic modulus G" at the standard temperature 190°C at the frequencies of $\omega_0$=0.1 (rad/sec) and $\omega_1$ =100 (rad/sec) respectively. When the value ΔEa of the ethylene. α-olefin copolymer is in the aforementioned range, the copolymer has satisfactory melt elasticity, and is improved in film processability of in comparison with conventional LLDPE having the same MFR as the copolymer of the present invention.

Furthermore, the ethylene.α-olefin copolymer of the present invention exhibits an extremely simple and sharp endothermic peak in differential scanning calorimetry (DSC) in comparison with an LLDPE polymer which is produced with a conventional Ziegler-Natta catalyst and exhibit a plurality of complicated peaks in DSC. The ethylene.α-olefin copolymer satisfies the relation (3) below between the temperature of the peak of the endothermic curve (Tm (°C)) and the number of short chain branches (SCB) for 1000 carbon atoms derived from infrared spectroscopy:

$$Tm < -1.8(SCB) + 138 \quad (3)$$

more preferably

$$Tm < -1.8(SCB) + 135 \quad (3')$$

When the Tm and the SCB of the ethylene.α-olefin copolymer satisfy the relation above, the copolymer exhibits low haze and is excellent in heat-sealing properties, processability, and transparency.

Furthermore, the ethylene.α-olefin copolymer of the present invention has preferably the ratio (Mw/Mn) of the weight-average molecular weight (Mw) to the number-average molecular weight (Mn) of not higher than 3 in order to obtain a higher impact resistance of the copolymer.

The above-described copolymer of the present invention can be produced by copolymerization of ethylene with α-olefin by use of a catalyst system constituted basically of a metallocene and an organometallic compound. Specifically, an example of the catalyst system comprises (a) a metallocene compound, (b) an organoaluminum compound, and (c) a metal salt compound; the metallocene compound (a) being represented by the general formula (4) or (5):

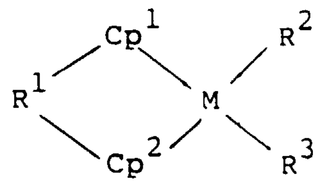

(4)

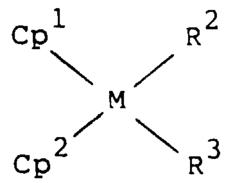

(5)

where $Cp^1$ and $Cp^2$ are independently a substituted or unsubstituted cyclopentadienyl group; $R^1$ is a lower alkylene group, a substituted alkylene group, a dialkylsilylene group, a dialkylgermanylene group, an alkylphosphinedyl group, or an alkylimino group and crosslinks $Cp^1$ and $Cp^2$ together; M is titanium, zirconium, or hafnium; $R^2$ and $R^3$ are independently hydrogen, halogen, or a hydrocarbon group, an alkoxy group, or aryloxy group each having 1 to 12 carbons,

the organoaluminum compound (b) being represented by the general formula (6) below:

$$Al(R^4)_3 \qquad (6)$$

where each $R^4$ is independently hydrogen, an alkyl group, an alkoxy group, or an aryl group, at least one $R^4$ being an alkyl group, and the metal salt compound (c) being represented by the general formula (7):

$$(C(L)_n)_b(A)_d \qquad (7)$$

where C is an alkali metal cation or an alkaline earth metal cation; L is a Lewis base; A is an anion having boron or aluminum; n is a number and $0 < n \leqq 6$; b and d are respectively an integer selected to balance the electric charge of the salt.

The catalyst system is described in more detail.

The metallocene compound employed in the above catalyst system is represented by the general formula (4) or (5) above. The specific examples of the metallocene includes:

bis(cyclopentadienyl)zirconiumdimethyl,
bis(methylcyclopentadienyl)zirconiumdimethyl,
bis(butylcyclopentadienyl)zirconiumdimethyl,
ethylenebis(indenyl)zirconiumdimethyl,
isopropylidene(cyclopentadienyl-1-fluorenyl)-zirconiumdimethyl,
diphenylmethane(cyclopentadienyl-1-fluorenyl)-zirconiumdimethyl,
dimethylsilylbis(2,4,5-trimethylcyclopentadienyl)-zirconiumdimethyl,
dimethylsilylbis(2,4-dimethylcyclopentadienyl)-zirconiumdimethyl,
dimethylsilylbis(3-methylcyclopentadienyl)zirconiumdimethyl,
bis(cyclopentadienyl)zirconium dichloride,

bis(methylcyclopentadienyl)zirconium dichloride,
bis(butylcyclopentadienyl)zirconium dichloride,
ethylenebis(indenyl)zirconium dichloride,
isopropylidene(cyclopentadienyl-1-fluorenyl)zirconium dichloride,
diphenylmethane(cyclopentadienyl-1-fluorenyl)zirconium dichloride,
dimethylsilylbis(2,4,5-trimethylcyclopentadienyl)zirconium dichloride,
dimethylsilylbis(2,4-dimethylcyclopentadienyl)zirconium dichloride,
dimethylsilylbis(3-methylcyclopentadienyl)zirconium dichloride,
bis(cyclopentadienyl)zirconium )zirconiumdiphenyl,
bis(methylcyclopentadienyl)zirconium )zirconiumdiphenyl,
bis(butylcyclopentadienyl)zirconiumdiphenyl,
ethylenebis(indenyl)zirconiumdiphenyl,
isopropylidene(cyclopentadienyl-1-fluorenyl)-zirconiumdiphenyl,
diphenylmethane(cyclopentadienyl-1-fluorenyl)-zirconiumdiphenyl,
dimethylsilylbis(2,4,5-trimethylcyclopentadienyl)-zirconiumdiphenyl,
dimethylsilylbis(2,4-dimethylcyclopentadienyl)-zirconiumdiphenyl,
dimethylsilylbis(3-methylcyclopentadienyl)zirconiumdiphenyl,
bis(cyclopentadienyl)zirconiumdibenzyl,
bis(methylcyclopentadienyl)zirconiumdibenzyl,
bis(butylcyclopentadienyl)zirconiumdibenzyl,
ethylenebis(indenyl)zirconiumdibenzyl,
isopropylidene(cyclopentadienyl-1-fluorenyl)-zirconiumdibenzyl,
diphenylmethane(cyclopentadienyl-1-fluorenyl)-zirconiumdibenzyl,
dimethylsilylbis(2,4,5-trimethylcyclopentadienyl)-zirconiumdibenzyl,
dimethylsilylbis(2,4-dimethylcyclopentadienyl)-zirconiumdibenzyl,
dimethylsilylbis(3-methylcyclopentadienyl)zirconiumdibenzyl,
bis(cyclopentadienyl)methoxyzirconium monochloride,
bis(methylcyclopentadienyl)methoxyzirconium monochloride,
bis(butylcyclopentadienyl)methoxyzirconium monochloride,
ethylenebis(indenyl)methoxyzirconium monochloride,
isopropylidene(cyclopentadienyl-1-fluorenyl)methoxyzirconium monochloride,
diphenylmethane(cyclopentadienyl-1-fluorenyl)methoxyzirconium monochloride,
dimethylsilylbis(2,4,5-trimethylcyclopentadienyl)methoxyzirconium monochloride,
dimethylsilylbis(2,4-dimethylcyclopentadienyl)methoxyzirconium monochloride,
dimethylsilylbis(3-methylcyclopentadienyl)methoxyzirconium monochloride,
bis(cyclopentadienyl)methylzirconium monochloride,
bis(methylcyclopentadienyl)methylzirconium monochloride,
bis(butylcyclopentadienyl)methylzirconium monochloride,
ethylenebis(indenyl)methylzirconium monochloride,
isopropylidene(cyclopentadienyl-1-fluorenyl)methylzirconium monochloride,
diphenylmethane(cyclopentadienyl-1-fluorenyl)methylzirconium monochloride,
dimethylsilylbis(2,4,5-trimethylcyclopentadienyl)methylzirconium monochloride,
dimethylsilylbis(2,4-dimethylcyclopentadienyl)methylzirconium monochloride,
dimethylsilylbis(3-methylcyclopentadienyl)methylzirconium monochloride;

and metallocene compounds derived by replacing the zirconium in the above zirconium compounds with titanium, or hafnium.

The organoaluminum compound (b) is represented by the general formula (6) above. The specific examples of the organoaluminum compound includes: trimethylaluminum, triethylaluminum, triisopropylaluminum, tri(n-propyl)aluminum, triisobutylaluminum, tri(n-butyl)aluminum, triamylaluminum, dimethylaluminum ethoxide, diethylaluminum ethoxide, diisopropylaluminum ethoxide, di(n-propyl)aluminum ethoxide, diisobutylaluminum ethoxide, di(n-butyl)aluminum ethoxide, dimethylaluminum hydride, diethylaluminum hydride, diisopropylaluminum hydride, di(n-propyl)aluminum hydride, diisobutylaluminum hydride, and di(n-butyl) aluminium hydride.

The metal salt compound (c) is represented by the general formula (7) above. The specific examples of the metal salt compound include:
aluminates such as lithium tetrakis(pentafluorophenyl) aluminate, lithium tetrakis(phenyl) aluminate, lithium tetrakis(p-tolyl) aluminate, lithium tetrakis(m-tolyl) aluminate, lithium tetrakis(2,4-dimethylphenyl) aluminate, lithium tetrakis (3,5-dimethylphenyl) aluminate, lithium tetrafluoroaluminate, sodium tetrakis(pentafluorophenyl) aluminate, sodium tetrakis(phenyl) aluminate, sodium tetrakis(p-tolyl) aluminate, sodium tetrakis(m-tolyl) aluminate, sodium tetrakis (2,4-dimethylphenyl) aluminate, sodium tetrakis(3,5-dimethylphenyl) aluminate, sodium tetrafluoroaluminate, potassium tetrakis(pentafluorophenyl) aluminate, potassium tetrakis(phenyl) aluminate, potassium tetrakis(p-tolyl) aluminate, potassium tetrakis(m-tolyl) aluminate, potassium tetrakis(2,4-dimethylphenyl) aluminate, potassium tetrakis (3,5-dimethylphenyl) aluminate, potassium tetrafluoroaluminate, magnesium tetrakis(pentafluorophenyl)-aluminate, magnesium tetrakis(phenyl) aluminate, magnesium tetrakis(p-tolyl) aluminate, magnesium tetrakis(m-tolyl) aluminate, magnesium tetrakis(2,4-dimethylphenyl) aluminate, magnesium tetrakis(3,5-dimethylphenyl) aluminate, magnesium tetrafluoroaluminate, calcium tetrakis(pentafluorophenyl) aluminate, calcium tetrakis(phenyl) aluminate, calcium tetrakis(p-tolyl) aluminate, calcium tetrakis(m-tolyl) aluminate, calcium tetrakis(2,4-dimethylphenyl) aluminate, calcium tetrakis(3,5-dimethylphenyl) aluminate, calcium tetrafluoroaluminate, and the like; borates such as lithium tetrakis(pentafluorophenyl) borate, lithium tetrakis(phenyl) borate, lithium tetrakis(p-tolyl) borate, lithium tetrakis(m-tolyl) borate, lithium tetrakis(2,4-dimethylphenyl) borate, lithium tetrakis(3,5-dimethylphenyl) borate, lithium tetrafluoroborate, sodium tetrakis(pentafluorophenyl) borate, sodium tetrakis(phenyl) borate, sodium tetrakis(p-tolyl) borate, sodium tetrakis (m-tolyl) borate, sodium tetrakis(2,4-dimethylphenyl) borate, sodium tetrakis(3,5-dimethylphenyl) borate, sodium tetrafluoroborate, potassium tetrakis(pentafluorophenyl) borate, potassium tetrakis(phenyl) borate, potassium tetrakis (p-tolyl) borate, potassium tetrakis(m-tolyl) borate, potassium tetrakis(2,4-dimethylphenyl) borate, potassium tetrakis (3,5-dimethylphenyl) borate, potassium tetrafluoroborate, magnesium tetrakis(pentafluorophenyl) borate, magnesium tetrakis(phenyl) borate, magnesium tetrakis(p-tolyl) borate, magnesium tetrakis(m-tolyl) borate, magnesium tetrakis (2,4-dimethylphenyl) borate, magnesium tetrakis(3,5-dimethylphenyl) borate, magnesium tetrafluoroborate, calcium tetrakis(pentafluorophenyl) borate, calcium tetrakis(phenyl) borate, calcium tetrakis(p-tolyl) borate, calcium tetrakis(m-tolyl) borate, calcium tetrakis(2,4-dimethylphenyl) borate, calcium tetrakis(3,5-dimethylphenyl) borate, calcium tetrafluoroborate; and ether complexes and tetrahydrofuran complexes of the above aluminates or borates.

The method for preparation of the catalyst for producing the copolymer of the present invention is not specially limited. The catalyst can be prepared, for example, by mixing the metallocene compound (a) with the organoaluminum compound (b) in an inert solvent, and subsequently bringing the resulting mixture into contact with the metal salt compound (c). The molar ratio of the metallocene compound (a) to the metal salt compound (c) is preferably in the range of from 1:0.01 to 1:1000, more preferably from 1:0.2 to 1:200, but is not specially limited thereto. The concentration of the organoaluminum compound (b) is not limited, but preferably the molar ratio of the metallocene compound (a) to the organoaluminum compound (b) is in the range of from 100:1 to 1:1000000, more preferably from 1:1 to 1:100000.

The copolymer of the present invention may be produced either in a liquid phase or in a gas phase. When the polymerization is conducted in a liquid phase, any conventionally used organic solvent may be employed: the solvent including specifically benzene, toluene, xylene, pentane, hexane and methylene chloride, or otherwise the olefin itself may be used as the solvent.

The polymerization temperature in the production of the copolymer of the present invention is preferably in the range of from -100 to 300°C, but is not limited thereto. The polymerization pressure may be in the range of from an ordinary pressure to 2452 bar, but usually in the range of from an ordinary pressure to 30 bar.

The aforementioned catalyst component may be supported on an inert carrier, and used as a solid catalyst system for the copolymerization in the present invention. More specifically, the solid catalyst system can be prepared by depositing the metallocene compound, the reaction product of the metallocene compound with the metal salt compound, the reaction product of the metallocene compound with the organoaluminum compound, the metal salt compound itself, or the organoaluminum compound itself on an inert carrier such as silica, alumina, magnesium chloride, a styrene-divinylbenzene copolymer, and polyethylene. Such a solid catalyst component obtained as above is particularly useful in gas phase polymerization.

The present invention is described in more detail by reference to examples.

In Examples and Comparative Examples, the polymer to which an antioxidant had been added was melt-extruded into pellets with an extruder, and the properties of the polymer were measured by use of the pellets according to the methods described below.

(1) MFR: This melt flow rate was measured according to ASTM D-1238.
(2) $\alpha$-Olefin content of copolymer: Measured by infrared absorption spectrum obtained by means of an infrared spectrometer (Model FT-IR5M, made by Nippon Bunko K.K.).
(3) Melting point (Tm) of copolymer: Measured with DSC apparatus (differential scanning calorimeter, DSC-200, made by Seiko Denshi Kogyo K.K.).
(4) Molecular weight, molecular weight distribution, and intrinsic viscosity: Measured by use of GPC apparatus (GPC Model 150C, made by Millipore Co.). The calibration curve for the molecular weight was prepared by the universal calibration method, and corrected by use of standard polystyrenes having known molecular weight (absolute molecular weights in the range of from 2600 to 8640000).

Column: TSK-GEL GMHHR-H(S), (made by Tosoh Corp.)
Detector: Refractometer and differential viscometer (made by Viscotech Co.)
Solvent: o-Dichlorobenzene
Measurement temperature: 140°C

The measurement with the GPC/continuous viscometer was conducted according to the method reported by Max. A. Haney: "The Differential Viscometer I, A New Approach to Measurement of Specific Viscosities of Polymer Solutions": Journal of Applied Polymer Science, 30, 3023-3036 (1985); and "The Differential Viscometer II, On-line Viscosity Detector for Size-Exclusion Chromatography": Journal of Applied Polymer Science, 30, 3037-3049 (1985).

(5) Haze: Measured by scattered light quantity (%) according to JIS Z-8722.

(6) Heat-sealing strength: Films of 80 μm thick were prepared by press molding. Two films were put together and heat-sealed by heating on both face at a breadth of 10 mm at 120°C under a pressure of 2 bar for one second. The peeling strength of the heat-sealed film was measured.

(7) Activation energy of loss elastic modulus G": Measured with a Weissenberg rheogoniometer at measurement temperatures of 160°C and 190°C at the frequency range ω of from 0.01 to 100 (rad/sec) according to the method described in "Reoroji Sokuteiho (Rheological Measurement)" edited by Rheology Committee of The Society of Polymer Science, Japan, published by Kyoritsu Publishing Co.

(8) Environmental stress cracking resistance (ESCR): Environmental stress cracking resistance value F 50 (hours) measured according to JIS K-6760.

(9) Properties of inflation film:

Film: Prepared by an inflation molding machine of 25 mm.
Film properties:

Haze: Measured according to ASTM D-1003.
Puncture impact strength: Measured according to JIS P-9134
Heat-sealing properties: A film formed in a thickness of 40 μm was heat-sealed and tested for peeling strength under the conditions below.

Heat-sealing conditions:

Pressure: 2 bar
Time: 1 sec
Sealing breadth: 10 mm
Heating: on both faces

Peeling conditions:

Sample breadth: 15 mm
Pulling rate: 300 mm/min

In the Examples and Comparative Examples, the procedures of polymerization, reaction and solvent purification were all conducted in an inert atmosphere. The solvent used in the reaction was purified, dried, and/or deoxidized preliminarily in a conventional manner. The compounds used in the reactions were synthesized and identified in a conventional manner.

Example 1

In a 10-liter autoclave, were placed 7 liters of hexane and 210 ml of hexene-1. Thereto, ethylene was introduced to a pressure of 8 bar. Separately, 10 ml of toluene, 1.25 mmol of triisobutylaluminum, 1.25 μmol of ethylenebis(indenyl) zirconium dichloride having been synthesized in a conventional manner, and 6.25 umol of diethyl ether complex of lithium tetrakis(pentafluorophenyl) borate were added into a reaction vessel in the named order, and the liquid mixture was stirred for 20 minutes. The resulting mixture was introduced into the aforementioned autoclave to initiate polymerization. The polymerization was conducted by keeping the ethylene pressure at 8 bar at 64°C for one hour.

After the polymerization, the resulting polymer was washed with a large amount of ethanol, and was dried at 80°C under reduced pressure for 8 hours. Consequently, ethylene.a-olefin copolymer was obtained in a yield of 622 g. The properties of the obtained copolymer were as follows: MFR: 6.5 g/l0min; density: 0.9261 g/cm$^3$; intrinsic viscosity ratio

$G_1$:0.56 and $G_2$: 0.79, therefore $G_1/G_2$=0.71; activation energy difference ΔEa: 1.4 kcal/mol; short chain branch number (SCB): 7.5 branches/1000 carbons by IR spectroscopy; melt tension (MT): 1.0 g; haze: 20.9 %; heat-sealing strength: 1.06 kg/l0mm; environmental stress cracking resistance (ESCR): not less than 200 hours; Mw/Mn by GPC: 2.9; and maximum peak temperature of endothermic curve in DSC: 114.5°C.

Example 2

Polymerization was conducted in the same manner as in Example 1 except that the polymerization temperature was 54°C.

After the polymerization, the resulting polymer was washed with a large amount of ethanol, and was dried at 80°C under reduced pressure for 8 hours. Consequently, ethylene.a-olefin copolymer was obtained in a yield of 765 g, which had properties of MFR: 0.76 g/l0min, density of 0.9147 g/cm$^3$, and intrinsic viscosity ratios of $G_1$:0.58 and $G_2$: 0.79, therefore $G_1/G_2$=0.73. Other properties are shown in Table 1.

The copolymer was molded into a film of 40 μm thick by means of an inflation film molding machine equipped with an extruder having a die of 30 mm in diameter under conditions of molding temperature of 200°C and take-off speed of 7 m/min. During the molding, the stability of the bubble was excellent. The molded film had haze of 5.9 %, and puncture impact strength of 7900 kg.cm/cm. The heat sealing strengths are shown in Table 2.

Comparative Example 1

An LLDPE which had been produced by use of a conventional Ziegler type catalyst and had an MFR of 7.8 g/10min and a density of 0.9207 g/cm$^3$ was evaluated in the same manner as in Example 1. The intrinsic viscosity ratios $G_1$ and $G_2$ of this LLDPE were 0.78 and 0.72 respectively, and therefore $G_1/G_2$=1.08. Other properties are shown in Table 1.

Comparative Example 2

An LLDPE which had been obtained by use of a conventional Ziegler type catalyst and had an MFR of 0.8 g/10min and a density of 0.9160 g/cm$^3$ was evaluated in the same manner as in Example 1. The intrinsic viscosity ratios $G_1$ and $G_2$ of this LLDPE were 0.86 and 0.83 respectively, and therefore $G_1/G_2$=1.04. Other properties are shown in Table 1.

This LLDPE was molded into a film in the same manner as in Example 2. The bubble stability in film formation was lower than that in Example 2. The haze of the film was 21.3 %, and the puncture impact strength was 7200 kg. cm/cm. The heat-sealing properties are shown in Table 2, from which the heat sealing properties are inferior to those in Example 2.

Comparative Example 3

(Preparation of Catalyst)

Silica (F-948, made by Fuji Davison K.K.) was dried under a nitrogen stream at 700°C for 7 hours. 100 Grams of the dried silica was suspended in 1 liter of toluene, and was mixed with 270 ml of a solution of methylaluminoxane in toluene (quantity of aluminum: 0.8 mol). The mixture was allowed to react at 80°C for 3 hours, thereby aluminum component being supported on a silica carrier. 15 mmol in terms of Al of this carrier, 0.06 mmol of ethylenebis(indenyl) zirconium dichloride, and 150 ml of hexane were placed in a nitrogen-purged container, and stirred at room temperature for 2 hours to obtain a solid catalyst component, which was separated and dried.

(Polymerization)

In a 10-liter autoclave, were placed 750 g of sodium chloride and 150 ml of hexene-1, and thereto ethylene was introduced to a pressure of 8 bar. Then 2.5 mmol of triisobutylaluminum and 75 μmol in terms of Zr atom of the above solid catalyst component were added thereto, and polymerization was allowed to proceed by maintaining the ethylene pressure at 8 bar at 80°C for one hour.

After the polymerization, the resulting polymer was washed with a large amount of water to remove the sodium chloride, and was dried at 80°C under reduced pressure for 8 hours. Consequently, ethylene.α-olefin copolymer was obtained in a yield of 220 g. The properties of the obtained copolymer were as follows: MFR: 0.8 g/10min; density: 0.9270 g/cm$^3$; intrinsic viscosity ratio $G_1$:0.34 and $G_2$: 0.65, therefore $G_1/G_2$=1.13 ; activation energy difference ΔEa 1.9 kcal/mol; short chain branch number (SCB): 7.0 branches/1000 carbons by IR spectroscopy; melt tension (MT): 9.0 g; haze 25.9 %; heat-sealing strength: 0.98 kg/10mm; environmental stress cracking resistance (ESCR): 170 hours;

Mw/Mn by GPC: 3.8; and maximum peak temperature of endothermic curve in DSC: 117.5°C.

Comparative Example 4

In a 10-liter autoclave, were placed 7 liters of toluene and 100 ml of hexene-1. Thereto were added, as the catalyst, 10 μmol of dimethylsilyl(t-butylamido)-(tetramethylcyclopentadienyl)titanium dichloride having been synthesized by a conventional method and 10 mmol of methylaluminoxane in the named order, and polymerization was allowed to proceed by introducing hydrogen at a pressure of 0.2 bar and ethylene at a pressure of 16 bar at 80°C for one hour.

After the polymerization, the resulting polymer was washed with a large amount of ethanol, and was dried at 80°C under reduced pressure for 8 hours. Consequently, ethylene.a-olefin copolymer was obtained in a yield of 879 g. The properties of the obtained copolymer were as follows: MFR: 0.86 g/10min; density: 0.9190 g/cm$^3$; intrinsic viscosity ratio $G_1$: 0.76 and $G_2$: 0.78, therefore $G_1/G_2$=0.97; activation energy difference ΔEa 6.8 kcal/mol; short chain branch number (SCB): 10.5 branches/1000 carbons by IR spectroscopy; melt tension (MT): 9.5 g; haze 5.0 %; heat-sealing strength: 0.99 kg/10mm; environmental stress cracking resistance (ESCR): 35 hours; Mw/Mn by GPC: 3.1; and maximum peak temperature of endothermic curve in DSC: 109.0°C.

As described above, the ethylene.α-olefin copolymer having the specified properties of the present invention is superior in melt elasticity, transparency, heat-sealing properties, and environmental stress cracking resistance.

Table 1

| | Example | | Comparative Example | | | |
|---|---|---|---|---|---|---|
| | 1 | 2 | 1 | 2 | 3 | 4 |
| MFR (g/10min) | 6.5 | 0.76 | 7.8 | 0.8 | 0.8 | 0.86 |
| Density (d) ($g/cm^3$) | 0.9261 | 0.9147 | 0.9207 | 0.9160 | 0.9270 | 0.9190 |
| $G_1/G_2$ | 0.71 | 0.73 | 1.08 | 1.04 | 1.13 | 0.97 |
| $\Delta Ea$ (kcal/mol) | 1.4 | 5.8 | 0.0 | 0.0 | 1.9 | 6.8 |
| SCB (branches/1000C) | 7.5 | 13.5 | 13.4 | 13.0 | 7.0 | 10.5 |
| MT (g) | 1.0 | 6.4 | 0.3 | 3.3 | 9.0 | 9.5 |
| Haze (%) | 20.9 | 5.9 | 21.3 | 41.2 | 25.9 | 5.0 |
| Heat-sealing strength (kg/10mm) | 1.06 | 1.55 | 0.55 | 0.24 | 0.98 | 0.99 |
| Mw/Mn | 2.9 | 2.9 | 3.8 | 5.0 | 3.8 | 3.1 |
| Peak temperature (°C) | 114.5 | 110.2 | 120.0 | 121.2 | 117.5 | 109.0 |
| ESCR (hours) | not less than 200 | not less than 200 | 50 | not less than 200 | 170 | 35 |

Table 2

| Heat-sealing temperature (°C) | Heat-sealing strength (kg/15mm) | |
|---|---|---|
| | Example 2 | Comparative Example 2 |
| 85 | 0.01 | 0 |
| 90 | 0.24 | 0.02 |
| 95 | 0.53 | 0.09 |
| 100 | 0.71 | 0.56 |
| 105 | 0.78 | 0.63 |
| 110 | 0.84 | 0.67 |
| 115 | 0.94 | 0.70 |
| 120 | 1.02 | 0.82 |

## Claims

1. An ethylene.α-olefin copolymer formed by copolymerization of ethylene with α-olefin having three or more carbons satisfying the conditions:

(A) melt flow rate (MFR) being in the range of from 0.001 to 100g/10min.
(B) density (d) being in the range of from 0.86 to 0.94 g/cm$^3$,
(C) ratio of $G_1$ to $G_2$ being in the range

$$0.50 \leqq G_1/G_2 \leqq 0.95 \quad (1)$$

where $G_i$ is the ratio of intrinsic viscosity [η] to the intrinsic viscosity $[\eta]_1$ of a linear polyethylene having the same weight-average molecular-weight, and $G_1$ is that for a high molecular weight fraction and $G_2$ is that for a low molecular weight fraction, and

(D) activation energies Ea(0.1) and Ea(100) (kcal/mol) of loss elastic modulus G" at the standard temperature 190°C frequency $\omega_0$ =0.1 (rad/sec) and $\omega_1$ =100 (rad/sec) respectively are in the relation:

$$\Delta Ea = Ea(0.1) - Ea(100) > 0 \quad (2).$$

**2.** A film formed by molding the ethylene.α-olefin copolymer of claim 1.

**3.** A process for the preparation of an ethylene.α-olefin copolymer as defined in claim 1 comprising the copolymerization of ethylene with an α-olefin in the presence of a catalyst system constituted basically of a metallocene and an organometallic compound.

## Patentansprüche

**1.** Ethylen/α-Olefin-Copolymer, erhalten durch Copolymerisation von Ethylen mit einem α-Olefin mit drei oder mehr Kohlenstoffatomen, das die Bedingungen erfüllt:

(A) Schmelzindex (MFR) im Bereich von 0,001 bis 100 g/10min,
(B) Dichte (d) im Bereich von 0,86 bis 0,94 $g/cm^3$,
(C) Verhältnis von $G_1$ zu $G_2$ im Bereich von

$$0{,}50 \leq G_1/G_2 \leq 0{,}95 \quad (1)$$

wobei $G_i$ das Verhältnis der Grenzviskositätszahl [η] zur Grenzviskositätszahl $[\eta]_1$ eines linearen Polyethylens mit dem gleichen Gewichtsmittel des Molekulargewichts ist, und $G_1$ die für eine Fraktion mit hohem Molekulargewicht und $G_2$ die für eine Fraktion mit niedrigem Molekulargewicht ist, und

(D) Aktivierungsenergien Ea(0,1) und Ea(100) (kcal/mol) des Dämpfungselastizitätsmoduls G" bei der Standardtemperatur 190°C, Frequenz $\omega_0$ = 0,1 (rad/sec) beziehungsweise $\omega_1$ = 100 (rad/sec) sind in der Beziehung

$$\Delta Ea = Ea(0{,}1) - Ea(100) > 0 \quad (2)$$

angegeben.

**2.** Folie, hergestellt durch Formung des Ethylen/α-Olefin-Copolymers von Anspruch 1.

**3.** Verfahren zur Herstellung eines Ethylen/α-Olefin-Copolymers gemäß Anspruch 1, umfassend die Copolymerisation von Ethylen mit einem α-Olefin in Anwesenheit eines Katalysatorsystems, das im wesentlichen aus einem Metallocen und einer Organometallverbindung besteht.

## Revendications

**1.** Copolymère éthylène/α-oléfine, obtenu par la copolymérisation de l'éthylène avec une α-oléfine ayant trois atomes de carbone ou davantage et satisfaisant aux conditions suivantes :

(A) un indice de fluidité à l'état fondu dans la plage de 0,001 à 100 g/10 min,
(B) une densité (d) dans la plage allant de 0,86 à 0,94 $g/cm^3$,
(C) un rapport de $G_1$ sur $G_2$ dans la plage de

$$0{,}50 \leq G_1/G_2 \leq 0{,}95 \quad (1)$$

où $G_i$ est le rapport de la viscosité intrinsèque [η] sur la viscosité intrinsèque $[\eta]_1$ d'un polyéthylène linéaire ayant le même poids moléculaire moyen en poids, $G_1$ étant celui d'une fraction à haut poids moléculaire et $G_2$ celui d'une fraction à bas poids moléculaire et

(D) des énergies d'activation Ea(0,1) et Ea(100) (kcal/mol) du module de perte d'élasticité G" à la température standard de 190 °C, pour la fréquence $\omega_0$ = 0,1 (rad/sec) et pour la fréquence $\omega_1$ = 100 (rad/sec), liées par la relation :

$$\Delta Ea = Ea(0,1) - Ea(100) > 0 \qquad (2).$$

**2.** Film formé par moulage du copolymère éthylène/a-oléfine de la revendication 1.

**3.** Procédé de préparation d'un copolymère de l'éthylène et d'une α-oléfine comme défini dans la revendication 1, consistant à faire copolymériser de l'éthylène avec une α-oléfine en présence d'un système catalyseur constitué essentiellement d'un métallocène et d'un composé organométallique.